# EUROPEAN PATENT SPECIFICATION

(11) **EP 0 631 679 B1**
(45) Date of publication and mention of the grant of the patent: **13.10.1999**
(21) Application number: 93907363.1
(22) Date of filing: 10.03.1993
(51) Int. Cl.: G06K 7/10

(54) **READER FOR DECODING TWO-DIMENSIONAL OPTICAL INFORMATION**
LESER ZUM DEKODIEREN ZWEI-DIMENSIONALER OPTISCHER INFORMATION
LECTEUR A BALAYAGE PERMETTANT DE DECODER DES INFORMATIONS OPTIQUES BIDIMENSIONNELLES

(30) Priority: 12.03.1992 US 849771; 26.05.1992 US 889705; 27.07.1992 US 919488
(43) Date of publication of application: 04.01.1995
(73) Proprietor: NORAND CORPORATION, Cedar Rapids, IA 52401 (US)
(72) Inventor: DURBIN, Dennis, A., Cedar Rapids, IA 52402 (US)
(74) Representative: Singleton, Jeffrey
(86) International application number: US9302139
(87) International publication number: WO9318478

(56) References cited:
- EP-A- 0 349 770
- EP-A- 0 385 478
- US-A- 4 044 227
- US-A- 4 360 798
- IBM Technical Disclosure Bulletin, Volume 21, No. 2, July 1978, (Armonk, New York, USA), E.R. Williams, "Two-dimensional Image Sensor Using One-dimensional Sensor array"
- Patent Abstracts of Japan, Vol 13, No 66, P-828, 1989-11-07, abstract of JP, 63-253483 (HITACHI LTD),

## Description

### Background of the Invention

### 1. Technical Field

The present invention is directed to optical information readers and more particularly to readers adapted to selectively decode two-dimensional optical information sets.

### 2. Description of the Prior Art

Conventional bar code symbols have small data storage capacities. This reduces the utility of conventional bar code scanner and reader systems. For example, the 11 digit Uniform Pricing Code found on most supermarket items acts as an identifying number which may be utilized to access information in a database. Codes of this type do not carry information along their vertical axis, and are therefore, less prone to skewing errors during decoding.

Two-dimensional bar code symbols or "portable data files" have recently been developed. With codes of this type access to a database is not required since the code contains the information which would normally be keyed for in a database. Since reliance on a database is not required, information may be accessed and exchanged more readily and reliably. However, in order to decode two dimensional codes a more sophisticated apparatus is required. This is primarily true since normal vertical code redundancy is not present, making code registration, orientation, and condition very important.

Several two-dimensional coding standards have been proposed, e.g., Code 49, 16K, Identicode MLC-2D, and Code PDF417. While such codes are capable of storing information such as price, name of product, manufacturer, weight, expiration date, inventory data, shipping information, and the like; apparatus which assist the user in aiming and decoding two-dimensional codes are not currently available. For example, two dimensional codes might consist of a stack of conventional linear codes. Each line may contain different information, such as (1) pricing information, (2) product name, (3) name of the manufacturer, (4) product weight, (5) expiration date, (6) inventory data, (7) shipping information, and the like. Additionally, a user may require the ability to selectively store or send portions of the decoded bar code symbol.

### 3. Objects of the Invention

Therefore, it is a principal object of the present invention is to provide a scanner adapted to selectively read two-dimensional optical information sets.

Another object of the present invention is to provide a scanner adapted to selectively read two-dimensional optical information sets in ambient light.

Another object of the present invention is to provide a scanner adapted to selectively read two-dimensional optical information sets from a wide range of distances.

Another object of the present invention is to provide a scanner adapted to selectively read two-dimensional optical information sets while assisting a user in aiming the reader.

Another object of the present invention is to provide a scanner adapted to selectively read two-dimensional optical information sets which is economical to manufacture and durable in use.

Finally, another object of the present invention is to provide a scanner adapted to selectively read two-dimensional optical information sets which is efficient in operation, simple in construction, easy to use, and trouble free. These and other objects will be apparent to those skilled in the art.

EP-A-0 385 478 discloses an apparatus for scanning two-dimensional bar codes, comprising a 2-D CCD, a video RAM, control means, autofocusing means, a zoom mechanism, a decoder and power supply means. However the apparatus of EP-A-0 385 478 is believed to embody some of the disadvantages of the prior art.

### Summary of the Invention

The present invention is defined in Claims 1 and 13. Apparatus according to the invention includes a novel scanner for reading two-dimensional optical information sets. In one exemplary embodiment the invention includes a housing for supporting a photosensitive array associated with an optical means (eg. a so-called optical string means) which is adapted to focus optical information on the array. Also provided are array and optical string control means for controlling the array and optical string such that the output of selected images on the array are processed via optional pattern recognition means. Images recognized to contain decodable optical information are displayed and highlighted by the display means. In this fashion a user is assisted in aiming, recognizing, and confirming the decodability of the image incident on the array.

### Brief Description of the Drawings

Other objects and advantages of the invention will become apparent upon reading the following detailed description and upon reference to the drawings, in which:
Figure **1** is a perspective view of a preferred embodiment of the two-dimensional optical information reader showing a user being assisted by the display of the reader in aiming;
Figure **2** is a partial top perspective view of the reader illustrating the display wherein the display indicates to a user that a two-dimensional, decodable, bar code symbol may be read if the user adjusts the aim of the reader to the left and above;
Figure **3** is a partial top perspective view of the reader illustrating the display wherein the display indicates to a user that a two-dimensional, decodable bar code symbol is centered in view and available for reading;
Figure **4** is a highly diagrammatic perspective view of the image capturing elements of a linear array exemplary embodiment of the present invention;
Figure **5** is a highly diagrammatic perspective view of the image capturing elements of a two-dimensional array exemplary embodiment of the present invention;
Figure **6** is a block diagram illustrating the various components of the present invention; and
Figure **7** is a more detailed block diagram illustrating the various components of the present invention.

While the invention will be described in connection with a preferred embodiment, it will be understood that it is not intended to limit the invention to that embodiment. On the contrary, it is intended to cover all alternatives, modifications and equivalents as may be included within the scope of the invention.

### Description of the Preferred Exemplary Embodiments

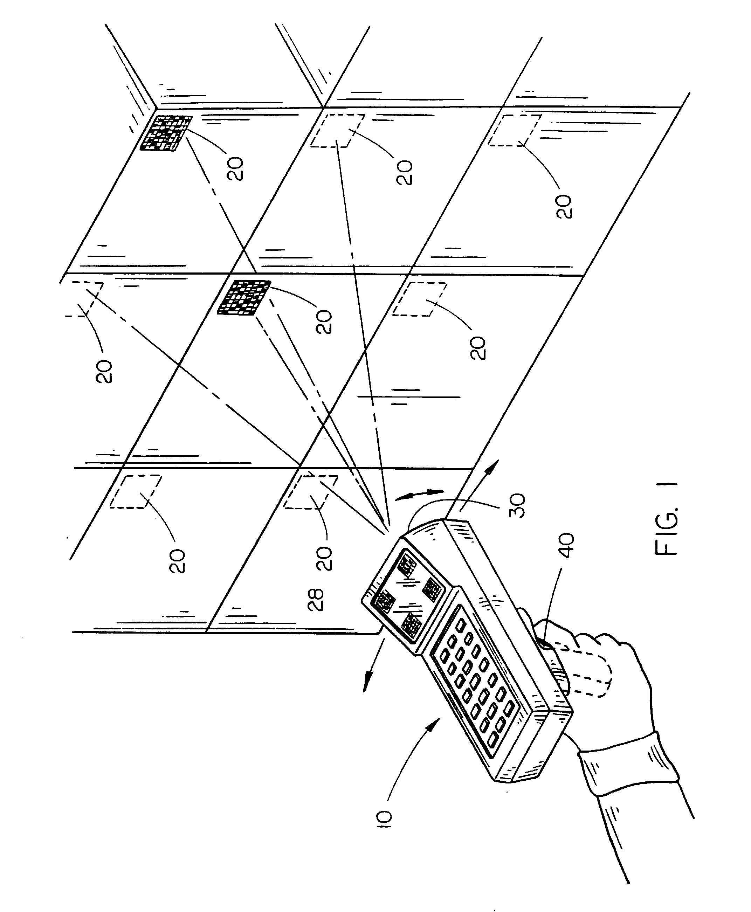

Two preferred exemplary embodiments of the present invention **10** and **100** are illustrated in Figures **1** through **7** (Figures **1**, **4**, **6**, and **7**; and Figures **1**, **5**, **6**, and **7** respectively). Both embodiments teach the construction and use of readers capable of decoding "portable data files."

Each exemplary embodiment utilizes image capture means, pattern recognition means, and a real time display for assisting a user in aiming, recognizing, confirming decodability, and decoding two-dimensional bar code symbols. The embodiments (**10, 100**) differ primarily in the particular construction and operation of their image capture means.

In a first exemplary embodiment **10** the image capture means **12** utilizes a one-dimensional photosensitive array **14** to read images in a horizontal (X) direction and mechanical means **16** to read images in a vertical direction. Conversely, in a second exemplary embodiment **100** the image capture means **112** utilizes a two-dimensional photosensitive array **114** to read images in horizontal (X) and vertical (Y) directions (Figure **5**).

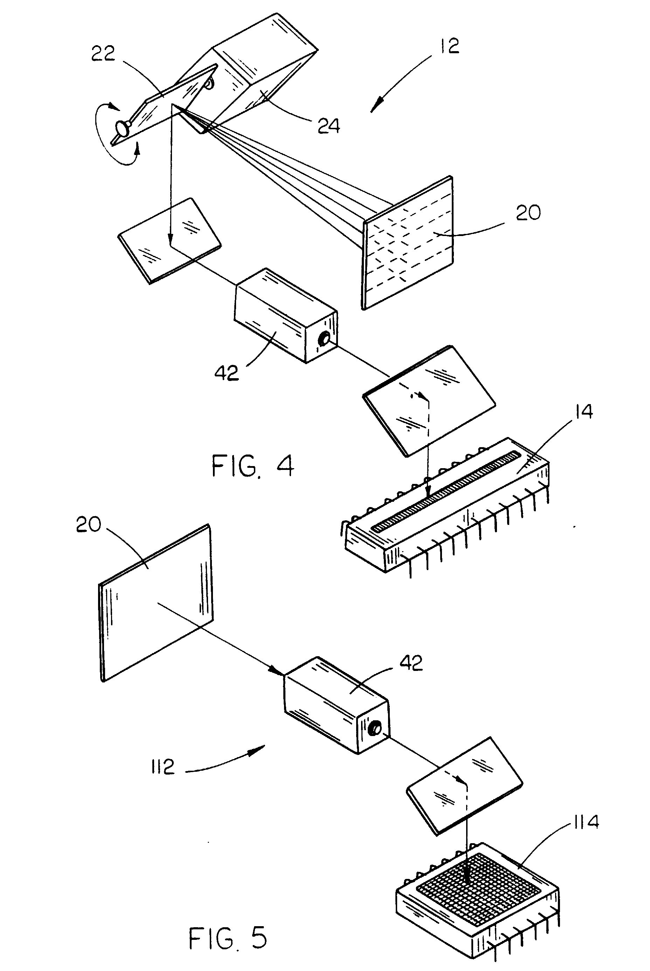

Turning to the first exemplary embodiment **10,** having image capture means **12,** best illustrated in Figure **4**, vertical components **16** of a two-dimensional bar code symbol **20** are read by rastering succeeding horizontal components **18** across a single line photosensitive array **14.** This is accomplished, in such an exemplary embodiment, via a mirror **22** rotatably mounted about its horizontal plane. The mirror **22** is rotatably connected and driven by mirror control means **24.** In a preferred exemplary embodiment an extremely low mass mirror prism (**22**) may be utilized and driven by solenoids, a piezo, or the like (**24**).

In this embodiment **10**, an expanded 5,000 pixel single line photosensitive array **14** may be utilized. However, a 2,048 pixel one-dimensional line photosensitive array would also work with a reduced range. A special photosensitive array might also be designed with faster scan line times and reduced power requirements.

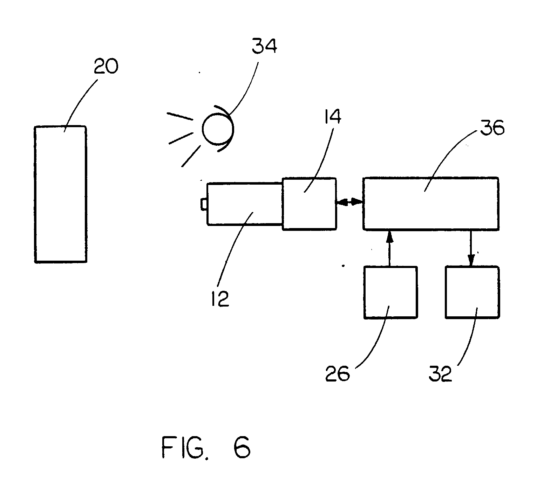

Vertical raster (Y) is variable under microprocessor **26** control (Figure **6**). Likewise, the readout speed of the photosensitive array **14** is variable under microprocessor **26** control wherein the readout is preferably based on analyzed data recovered on each scan. Likewise, integration time and gain of sense amplifiers and filters acting on the photosensitive array **14** data may also be variable under microprocessor **26** control.

Additionally, an electronic option to read lower density bar code symbols could also be incorporated wherein every other, every third, or every fifth pixel might be read. Likewise, an electronic option to read high density short strings might also be incorporated wherein the left 1666, then center 1666, and then right 1666 pixels are read.

In another exemplary species of this embodiment **10** the photosensitive array shift register drives are built into the array. Electronic control of each charge well might also be provided such that wells not in use would not exist to the microprocessor **26**. Such a configuration prevents dark currents from filling empty wells. Additionally, wells might also be created by the microprocessor **26** just prior to use. Thus, no special cleaning cycles will be necessary. In any event, the apparatus of the invention includes memory means for storing output from the array. The memory optionally is volatile.

In another exemplary species of this embodiment **10** the interface could be more parallel wherein multiple photosensitive array **14** shift sections could each shift out their own output, for example, five outputs (each shifting 1000 pixels), or ten at 500 pixels, etc. Such a design would also utilize square pixel dimensions in order to maintain equal vertical and horizontal density.

The image capture means **12** may also include autofocus means. Autofocus could be accomplished via infrared or ultrasonic independent means, or via the use of photosensitive array scans in order to maximize transition sharpness of the received image, or the like. Likewise, the image capture means **12** would also include zoom controlled by the user.

Aiming of the reader **10** would be accomplished by physical proximity for close range (contact to two inches). The use of spotter beams is not desired because of their additional cost and tendency to washout in lighted areas. Aiming of the reader **10** for long range would be accomplished via a display **28** (< 1 to 20 plus feet). The display **28**, in a preferred exemplary embodiment **10**, would be a one inch CAT, dedicated LCD graphics screen, or even a terminal screen on an integrated scanner.

In such an embodiment **10** low resolution scanning may be performed while aiming. Image processing techniques would then be utilized to display lines and shadows with sufficient aiming detail (Figures **1**, **2**, and **3**). The microprocessor **26** would then utilize pattern recognition techniques to locate rectangular shapes (or other information encoded shapes). Where the microprocessor **26** locates rectangular shapes (or other information encoded shapes) which might be decodable bar code symbols, the closest such shape to the center of the reader **10** window **30** would then be displayed on the display **28** in a highlighted manner, e.g., flashing, reverse video, or the like. During this same time period the microprocessor **26** may also make an attempt to decode the contents within the highlighted area. Then, if the decode attempt is successful, the highlighted area could return to normal, or the like, in order to notify the user that the decode was successful and that the user may either accept or reject the data. If the data is from the wrong bar code symbol, or the wrong portion of a correct bar code symbol, then the user may aim at a new area without accepting the data.

The use of zoom during aim induces jitter, therefore, in order to overcome this problem, more data may be scanned than is viewed on the display **28**. If 1,000 pixels are collected but only 700 are viewed on the display **28**, then the microprocessor **26** may compare general patterns of each scan to detect motion and adjust the data sent to the display **28** to compensate for the motion. Additionally, as the displayed portion of the collected pixel picture reaches a boundary of the pixel picture, then the displayed picture would start to move such that the center of the collected data is then shown as the displayed picture. In another species of an exemplary embodiment **10** all rectangular areas within the displayed area may be highlighted to indicate to a user which areas are probable bar codes, and may annunciate that bar code symbol, or portion thereof, which the microprocessor **26** is currently attempting to decode.

Illumination might come from an internal source, LED's or such, where the light **34** would be on continuously during the aiming and decoding. The light **34** would be variable under processor control in order to reduce power consumption. Additionally, local illumination would only be necessary over a nominal distance. Beyond this, ambient light would contribute more and more of the actual bar code illumination. While indoors, flood lighting or indoor overhead lights would be necessary. The intention of this design is such that if the user can see the bar code, the reader **10** will also, and decoding is possible.

Neural network and fuzzy logic processor programming and hardware design/architecture are both required. Digital signal processing techniques may also be used to help improve the basic data collected as far as signal level normalization within the bar code rectangular areas, taking advantage of bar codes still being printed in **2** colors only. Neural network concepts of weighted inputs and highly parallel processing would then be used during aiming and during a search for potential bar code **20** rectangles.

The use of concise dedicated functional neural processor, each with a single function, all reduced to silicon and all placed in a single ASIC is preferred. In this manner, **20** microprocessors, wherein one looks for a vertical line, another for a horizontal line, and another for angles, and the like, could all examine the same data base at the same time. Very high speed data (image) evaluation will also be utilized in a preferred embodiment for both aiming and decoding. The same microprocessors could also be responsible for power control in the image capture means **12**. Additionally, it is preferred that not all processing functions be powered at all times or at the same time. Also, illumination would end and count (data) collection would cease after data was decoded. A communication processor could also be provided and such communication processor could be functional until data was transferred.

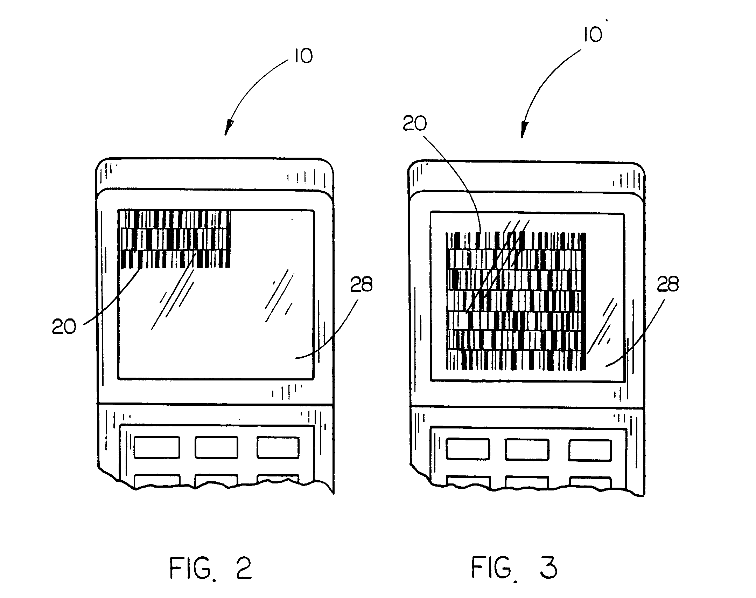

A typical operation might be as follows: The user directs the reader **10** toward the bar codes **20** to be read (Figure **1**). The user pulls a trigger means **40** to activate the aiming sequence. The user views the display **28** to verify reader **10** aim. The reader **10** auto focuses, starting with the focus setting of the previous read. The user views the display **28** and moves the reader **10** and starts to zoom as necessary as the desired bar code symbol **20** comes into view (Figure **2**). The reader **10** continues to show the viewed field in the display **10** even as it decodes the bar code symbol **20.** The reader **10** highlights the decoded bar code symbol **20** (Figure **3**). The user may accept the decoded data via the trigger means **40**, or the like. If the user does not want the data, he or she may move the reader **10** such that another desired bar code symbol **20** is centered and highlighted as decoded, or such that no bar code is highlighted and no decode would occur.

This feature is very beneficial in that one bar code can be selected on a page containing many adjacent codes without the sometimes impossible requirement of ensuring the scan line (laser) goes through only the desired code.

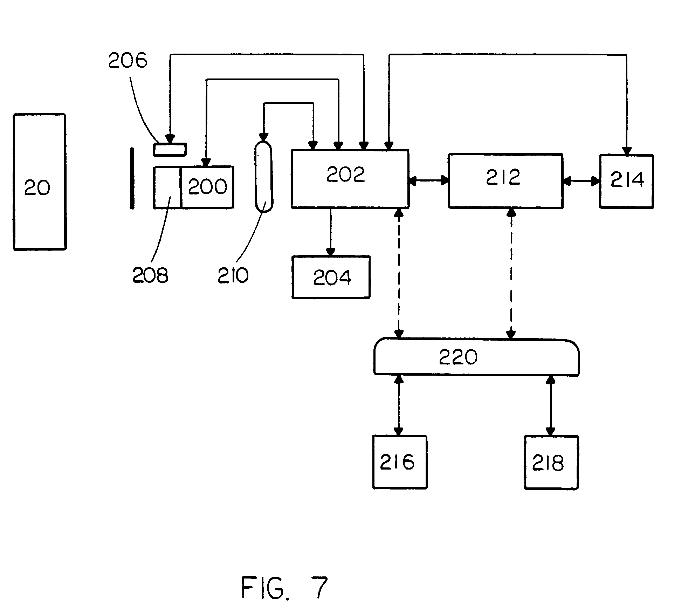

Figure **7** is a block diagram illustrating the functional block organization of an exemplary embodiment of the present invention. The optic string **200** allows for image focus and zoom. Both focus and zoom management are provided by the control processor **202**. The input switches **204,** such as the trigger **40,** may be utilized to enable the scan function, or the like. While in the scan mode, focusing may be achieved according to at least two methods. As shown, there is a focus block function **206** which may utilize a separate range detection circuit (i.e., such as ultra-sonic or infra-red ranging means). This is the first type of focusing method. This method allows the control processor **202** to determine the range of an image from the scanner and move the lens assembly **208** accordingly without powering up, or at least without operating the image sensor **210** circuitry, data analyzing means **212**, and display **214.** In this fashion battery power is conserved. The second type of focusing method utilizes the image sensor 210/processing means **212** to detect a lack of focus by data frequency analysis, i.e., moving the lens assembly **208** in order to maximize the high frequency content of the image data. The second type of focusing requires fewer parts, but more power and the initial corrective movement may be in an incorrect direction. Using past direction history will improve chances of correct initial direction choice. Also any optically required focus adjustments due to zoom changes may be obtained from a look-up table within the control means and included in the control of focus during zoom changes.

The image sensor may be either a single line several thousand pixel sensor (from at least 1000 to 5000 pixels depending on scan requirements) or an array sensor with from at least 500 to 1500 pixels in both the X and Y axis. The preferred mode is to utilize an array sensor since it is both faster and requires fewer moving parts. However, cost and power requirements are greater with an array sensor.

As previously discussed, a one dimensional array requires motion in the orthogonal direction to the pixel layout in order to obtain a 2-D image. The pixels in both sensors are square in dimension in order to maintain relative dimensions in both X and Y directions. One method of providing vertical dithering (back and forth) is via a piezo element driven mirror within a folded optic path. However, a rotating polygon cylinder may also be utilized.

In order to reduce power and gain speed in honing in on an image, both image sensor methods allow partial reading of the sensor fields. This means that during a line scan of a one line sensor, a programmably controlled number of pixels are skipped within the sensor on a cyclic basis in order to obtain less dense scan information more rapidly. For instance, reading only every other, every third, or every fifth pixel means less taken to process the data. A less detailed image is acquired, but speed, not great detail is required for general aiming and setup. In the vertical direction, the mirror is moved further between samples to compensate for the partial pixel sample and in order to keep spatial relationships constant. With a two-dimensional array, the same partial pixel viewing is done in both directions at the same rate. Both sensor types allow controlled exposure time independent of cycle time.

The control processor means contains at least one microprocessor. The control processor is responsible for controlling focus, zoom, illumination (if necessary), sensor timing, power management, and communication to other system blocks. The control processor utilizes fuzzy logic decision structures to quickly focus and to analyze the overall image pattern. It is also responsible for controlling the sensor when retrieving high density pixel strings from portions of the sensor. This is useful when a low density pixel scan has enabled the processing function means to recognize a potentially decodable shape. A maximum density scan is then done over that portion of the sensor to try to determine if decode is possible. These high density scan portions might consist of the left, center, and right sections of the sensor. This may also be accomplished by programming start and stop points within the sensor to control which section is retrieved.

Under zoom conditions, user movement will be more apparent and objectionable. The processing function means controls the image sent to the display for assisting the user in aiming the scanner unit. The processing function means helps remove jitter caused by user motion by modifying the image sent to the display. The image sent to the display is a smaller portion of the actual scanned image. Fuzzy logic structures are again used to quickly determine patterns and shapes and track their movement. The smaller (or subset) image that is displayed remains, positioned as is, in the display until the displayed image bumps up against a border of the true collected image. Then the display image starts to move to the rate of user movement. The processor means is continually working to reduce jitter while also trying to recognize and decode potentially decodable images. It also enunciates potentially decodable images in the display, for instance surrounding an image with a solid outline, and marks fully decoded images in another manner, such as reverse video.

Communication control means **220** communicates with the control and processing means to provide interface to a host system. The communication control means **220** may also have its own microprocessor for handling protocol and data transfer. In a tethered version **216** battery power may be self contained or derived from a portable hand-held terminal. Where a wireless link **218** is utilized the communication control means may also control the RF or IR link.

The present invention may be constructed for use in a docking type system for recharging/communicating with the apparatus disclosed herein. A docking station which might be adapted for use with the present invention is disclosed in a copending application U.S. Patent Nº 5 227 614, illustrates arrangements which may be embodied in a peripheral shell **260** (FIG. 10; 07/451,322). Likewise, the disclosure of United States Patent Nº 4,877,949, issued October 31, 1989, illustrates means for focusing an image of optically readable information over a substantial range of distances. U.S. Patent Nº 5 227 614 illustrates a display **14** (FIGS. 13 and 14) adapted to assist a user of an apparatus in reading optically readable information. Finally, U.S. Patent Nº 5 227 614, illustrates optically readable information digitizing and decoding means (FIGS. **7** through **18**). While the invention has been described with a certain degree of particularity, it is manifest that many changes may be made in the details of construction and the arrangement of components without departing from the scope of the disclosure. It is understood that the invention is not limited to the embodiments set forth herein for purposes of exemplification.

Thus, there has been shown and described an improved two-dimensional optical information reader.

## Claims

1. An apparatus (10;100) for reading two-dimensional optical information, comprising:
a) a housing having an opening;
b) a photosensitive array (14;114;210) mounted within said housing for capturing two-dimensional optical information ;
c) optical means (42;200) associated with said array (14;114;210) and said opening of said housing for focusing said optical information on said array;
d) control means (26;202) for controlling said array (14;114;210) and optical means;
e) memory means for storing output from said array;
f) electrical power supply means for providing power for the operation of said apparatus; and
g) decoding means for decoding optical information;
characterized by the inclusion of:
h) display means (28;214) for displaying an image of said optical information captured by said array.

2. An apparatus according to Claim 1, including:
i) pattern recognition means (26;212) for assisting a user in recognizing and confirming the decodability of optical information; and wherein
j) said display means (28;214) is associated with said housing for displaying said image as processed by said pattern recognition means (26;212), said display means (28;214) further including optical information decodability indication means.

3. An apparatus according to Claim 2, including:
k) user feedback means (40), providing user interface with said apparatus, for facilitating user control over said optical means (42;200), array (14;114;210) and display means (28;214).

4. The apparatus of Claim 1, wherein said housing is of a size and shape suited for hand-held operation.

5. The apparatus of Claim 1, wherein said photosenstive array is a one-dimensional array (14).

6. The apparatus of Claim 5, wherein said optical means further comprises means (22;24) for rastering one-dimensional image segments of a two-dimensional image onto the photosensitive regions of said array (14).

7. The apparatus of Claim 1, wherein said photosensitive array (14) is a two-dimensional array.

8. The apparatus of Claim 1, further comprising zoom means for changing the image height of an object focused on said array.

9. The apparatus of Claim 1, further comprising focusing means for variably focusing the image of an object on said array.

10. The apparatus of Claim 1, wherein said memory is volatile.

11. The apparatus of Claim 1, wherein said pattern recognition and optical information decoding means includes parallel processor means (26) controlled at least in part by a fuzzy logic instruction set for both aiming and pattern recognition of likely optical information.

12. The apparatus of Claim 1, wherein said optical means further comprises auto focus means.

13. A process for reading two-dimensional optical information, comprising:
a) directing a scanner (10;100) at optical information (2) to be read, wherein said scanner includes;
1) a housing having an opening;
2) a photosensitive array (14;114;210) mounted within said housing for capturing two-dimensional optical information ;
3) optical means (42;200) associated with said array (14;114;210) and said opening of said housing for focusing said optical information on said array;
4) control means (26;202) for controlling said array (14;114;210) and optical means;
5) memory means for storing output from said array;
6) electrical power supply means for providing power for the operation of said apparatus;
7) decoding means for decoding optical information; and
8) display means (28;214) for displaying an image of said optical information captured by said array,
b) displaying said image on said display ; and
c) aiming said scanner at an optical information set to be read at least partially with the aid of said image on said display.

14. The process of Claim 13, wherein said housing is of a size and shape suited for hand-held operation.

15. The process of Claim 13, wherein said photosensitive array (14) is a one-dimensional array.

16. The process of Claim 15, wherein said optical means further comprises means (22;24) for rastering one-dimensional image segments of a two-dimensional image onto the photosensitive regions of said array (14).

17. The process of Claim 13, wherein said photosensitive array (114) is a two-dimensional array.

18. The process of Claim 13, further comprising zoom means for changing the image height of an object focused on said array.

19. The process of Claim 14, further comprising focusing means for variably focusing the image of an object on said array.

20. The process of Claim 13, wherein said memory is volatile.

21. The process of Claim 13, wherein said pattern recognition and optical information decoding means (26) includes parallel processor means controlled at least in part by a fuzzy logic instruction set for both aiming and pattern recognition of likely optical information.

22. The process of Claim 13, wherein said pattern recognition means (26) is comprised of a neural network.

23. The process of Claim 13, wherein said optical means (42;200) further comprises auto focus means.

24. The process of Claim 13, further comprising the step of subtracting any user hand jitter from the image displayed to the user.

25. The apparatus of Claim 1, further comprising means for limiting image jitter displayed on the display (28).

26. The process of Claim 13, wherein the apparatus includes:
9) pattern recognition means (26;212) for assisting a user in recognizing and confirming the decodability of optical information; and wherein
10) said display means (28;214) is assocaited with said housing for displaying said image as processed by said pattern recognition means (26;212), said display means (28;214) further including optical information decodability indication means.

## Patentansprüche

1. Gerät (10; 100) zum Lesen zweidimensionaler optischer Information mit:
a) einem Gehäuse mit einer Öffnung;
b) einer innerhalb des Gehäuses angebrachten lichtempfindlichen Anordnung (14; 114; 210) zum Erfassen zweidimensionaler optischer Information;
c) einer mit der Anordnung (14; 114; 210) und der Öffnung des Gehäuses in Verbindung stehenden optischen Einrichtung (42; 200) zum Fokussieren der optischen Information auf der Anordnung;
d) einer Steuereinrichtung (26; 202) zum Steuern der Anordnung (14; 114; 210) und der optischen Einrichtung;
e) einer Speichereinrichtung zum Speichern einer Ausgabe der Anordnung;
f) einer elektrischen Energieversorgungseinrichtung zum Liefern von Energie für den Betrieb des Geräts; und
g) einer Decodiereinrichtung zum Decodieren optischer Information;
gekennzeichnet durch den Einschluß einer:
h) Anzeigeeinrichtung (28; 214) zum Anzeigen eines Bildes der durch die Anordnung erfaßten optischen Information.

2. Gerät nach Anspruch 1 mit:
i) einer Mustererkennungseinrichtung (26; 212) zum Unterstützen eines Benutzers beim Erkennen und Bestätigen der Decodierbarkeit einer optischen Information; und worin
j) die Anzeigeeinrichtung (28; 214) mit dem Gehäuse zum Anzeigen des Bildes, wie es durch die Mustererkennungseinrichtung (26; 212) verarbeitet wurde, in Verbindung steht, wobei die Anzeigeeinrichtung (28; 214) ferner eine Einrichtung zur Angabe der Decodierbarkeit optischer Information enthält.

3. Gerät nach Anspruch 2 mit:
k) einer Benutzerrückkopplungseinrichtung (40), die eine Benutzerschnittstelle mit dem Gerät bereitstellt, zum Erleichtern einer Benutzersteuerung der optischen Einrichtung (42; 200), der Anordnung (14; 114; 210) und der Anzeigeeinrichtung (28; 214).

4. Gerät nach Anspruch 1, worin das Gehäuse eine für einen Handbetrieb geeignete Größe und Form hat.

5. Gerät nach Anspruch 1, worin die lichtempfindliche Anordnung eine eindimensionale Anordnung (14) ist.

6. Gerät nach Anspruch 5, worin die optische Einrichtung ferner Mittel (22; 24) zum Rastern eindimensionaler Bildsegmente eines zweidimensionalen Bildes auf den lichtempfindlichen Bereichen der Anordnung (14) aufweist.

7. Gerät nach Anspruch 1, worin die lichtempfindliche Anordnung (14) eine zweidimensionale Anordnung ist.

8. Gerät nach Anspruch 1, ferner mit einer Zoomeinrichtung zum Ändern der Bildhöhe eines auf der Anordnung fokussierten Objekts.

9. Gerät nach Anspruch 1, ferner mit einer Fokussiereinrichtung zum veränderbaren Fokussieren des Bildes eines Objekts auf der Anordnung.

10. Gerät nach Anspruch 1, worin der Speicher flüchtig ist.

11. Gerät nach Anspruch 1, worin die Mustererkennungs- und optische Information decodierende Einrichtung eine Parallelprozessoreinrichtung (26) enthält, die zumindest zum Teil durch einen Fuzzy-Logic-Anweisungssatz für sowohl ein Zielen als auch eine Mustererkennung einer möglichen optischen Information gesteuert wird.

12. Gerät nach Anspruch 1, worin die optische Einrichtung ferner eine Autofokuseinrichtung aufweist.

13. Verfahren zum Lesen zweidimensionaler optischer Information, umfassend ein:
a) Richten eines Scanners (10; 100) auf eine zu lesende optische Information (2), worin der Scanner enthält:
1) ein Gehäuse mit einer Öffnung;
2) eine innerhalb des Gehäuses angebrachte lichtempfindliche Anordnung (14; 114; 210) zum Erfassen zweidimensionaler optischer Information;
3) eine mit der Anordnung (14; 114; 210) und der Öffnung des Gehäuses in Verbindung stehende optische Einrichtung (42; 200) zum Fokussieren der optischen Information auf der Anordnung;
4) eine Steuereinrichtung (26; 202) zum Steuern der Anordnung (14; 114; 210) und der optischen Einrichtung;
5) eine Speichereinrichtung zum Speichern einer Ausgabe der Anordnung;
6) einer elektrischen Energieversorgungseinrichtung zum Liefern von Energie für den Betrieb des Geräts;
7) eine Decodiereinrichtung zum Decodieren optischer Information; und
8) eine Anzeigeeinrichtung (28; 214) zum Anzeigen eines Bildes der durch die Anordnung erfaßten optischen Information;
b) Anzeigen des Bildes auf der Anzeige; und
c) Zielen des Scanners auf einen zu lesenden optischen Informationssatz, zumindest zum Teil mit Hilfe des Bildes auf der Anzeige.

14. Verfahren nach Anspruch 13, worin das Gehäuse eine für einen Handbetrieb geeignete Größe und Form hat.

15. Verfahren nach Anspruch 13, worin die lichtempfindliche Anordnung (14) eine eindimensionale Anordnung ist.

16. Verfahren nach Anspruch 15, worin die optische Einrichtung ferner eine Einrichtung (22; 24) zum Rastern eindimensionaler Bildsegmente eines zweidimensionalen Bildes auf den lichtempfindlichen Bereichen der Anordnung (14) aufweist.

17. Verfahren nach Anspruch 13, worin die lichtempfindliche Anordnung (114) eine zweidimensionale Anordnung ist.

18. Verfahren nach Anspruch 13, ferner mit einer Zoomeinrichtung zum Ändern der Bildhöhe eines auf der Anordnung fokussierten Objekts.

19. Verfahren nach Anspruch 14, ferner mit einer Fokussiereinrichtung zum veränderbaren Fokussieren des Bildes eines Objekts auf der Anordnung.

20. Verfahren nach Anspruch 13, worin der Speicher flüchtig ist.

21. Verfahren nach Anspruch 13, worin die Mustererkennungs- und optische Information decodierende Einrichtung (26) eine Parallelprozessoreinrichtung enthält, die zumindest teilweise durch einen Fuzzy-Logic-Anweisungssatz für sowohl ein Zielen als auch eine Mustererkennung einer möglichen optischen Information gesteuert wird.

22. Verfahren nach Anspruch 13, worin die Mustererkennungseinrichtung (26) ein neuronales Netzwerk umfaßt.

23. Verfahren nach Anspruch 13, worin die optische Einrichtung (42; 200) ferner eine Autofokuseinrichtung aufweist.

24. Verfahren nach Anspruch 13, ferner mit dem Schritt eines Subtrahierens eines etwaigen Zitterns einer Benutzerhand von dem dem Benutzer angezeigten Bild.

25. Gerät nach Anspruch 1, ferner mit einer Einrichtung zum Begrenzen eines auf der Anzeige (28) angezeigten Bildzitterns.

26. Verfahren nach Anspruch 13, worin das Gerät enthält:
9) eine Mustererkennungseinrichtung (26; 212) zum Unterstützen eines Benutzers beim Erkennen und Bestätigen der Decodierbarkeit optischer Information; und worin
10) die Anzeigeeinrichtung (28; 214) mit dem Gehäuse zum Anzeigen des Bildes, wie es durch die Mustererkennungseinrichtung (26; 212) verarbeitet wurde, in Verbindung steht und ferner eine Einrichtung zur Angabe der Decodierbarkeit optischer Information enthält.

## Revendications

1. Appareil (10 ; 100) destiné à lire des informations optiques bidimensionnelles, comprenant :
a) un logement comportant une ouverture ;
b) une barrette photosensible (14 ; 114 ; 210) montée dans ledit logement et destinée à capturer des informations optiques bidimensionnelles ;
c) des moyens optiques (42 ; 200) associés à ladite barrette (14 ; 114 ; 210) et à ladite ouverture dudit logement et destinés à focaliser lesdites informations optiques sur ladite barrette ;
d) des moyens de commande (26 ; 202) destinés à commander ladite barrette (14 ; 114 ; 210) et les moyens optiques ;
e) des moyens de mémoire destinés à mémoriser le signal de sortie de ladite barrette ;
f) des moyens d'alimentation en énergie électrique destinés à l'amenée d'énergie nécessaire au fonctionnement dudit appareil ; et
g) des moyens décodeurs destinés à décoder les informations optiques ;
caractérisé en ce qu'il inclut :
h) des moyens d'affichage (28 ; 214) destinés à afficher une image desdites informations optiques capturées par la barrette.

2. Appareil selon la revendication 1, incluant :
i) des moyens de reconnaissance de forme (26 ; 212) destinés à aider un utilisateur à reconnaître et à confirmer la possibilité de décoder les informations optiques ; et dans lequel
j) lesdits moyens d'affichage (28 ; 214) sont associés audit logement afin d'afficher ladite image telle qu'elle est traitée par lesdits moyens de reconnaissance de forme (26 ; 212), lesdits moyens d'affichage (28 ; 214) incluant, en outre, des moyens d'indication de la possibilité de décoder les informations optiques.

3. Appareil selon la revendication 2, incluant :
k) des moyens de renvoi à l'utilisateur (40), procurant l'interface de l'utilisateur avec ledit appareil, destiné à aider à l'utilisateur à commander lesdits moyens optiques (42 ; 200), la barrette (14 ; 114 ; 210) et les moyens d'affichage (28 ; 214).

4. Appareil selon la revendication 1, dans lequel ledit logement à une taille et une forme qui conviennent à un fonctionnement en mode portatif.

5. Appareil selon la revendication 1, dans lequel ladite barrette photosensible est une barrette monodimensionnelle (14).

6. Appareil selon la revendication 5, dans lequel lesdits moyens optiques comprennent, en outre, des moyens (22 ; 24) destiné au balayage tramé de segments d'image monodimensionnels d'une image bidimensionnelle sur les zones photosensibles de ladite barrette (14).

7. Appareil selon la revendication 1, dans lequel ladite barrette photosensible (14) est une barrette bidimensionnelle.

8. Appareil selon la revendication 1, comprenant, en outre, des moyens de grossissement destinés à modifier la hauteur d'image d'un objet focalisé sur ladite barrette.

9. Appareil selon la revendication 1, comprenant, en outre, des moyens de focalisation destinés à focaliser de façon variable l'image d'un objet sur ladite barrette.

10. Appareil selon la revendication 1, dans lequel ladite mémoire est volatile.

11. Appareil selon la revendication 1, dans lequel lesdits moyens de reconnaissance de forme et de décodage des informations optiques (26) incluent des moyens à processeurs parallèles (26) commandés au moins en partie par un ensemble d'instructions à logique floue à la fois pour viser et reconnaître la forme d'informations optiques probables.

12. Appareil selon la revendication 1, dans lequel lesdits moyens optiques comprennent, en outre, des moyens à focalisation automatique.

13. Procédé de lecture d'informations optiques bidimensionnelles, comprenant les étapes consistant :
a) à orienter un dispositif de balayage (10 ; 100) vers des informations optiques (2) devant être lues, dans lequel ledit dispositif de balayage inclut :
1) un logement comportant une ouverture ;
2) une barrette photosensible (14 ; 114 ; 210) montée dans ledit logement et destinée à capturer des informations optiques bidimensionnelles ;
3) des moyens optiques (42 ; 200) associées à ladite barrette (14 ; 114 ; 210) et à ladite ouverture dudit logement et destinés à focaliser lesdites informations optiques sur ladite barrette ;
4) des moyens de commande (26 ; 202) destinés à commander ladite barrette (14 ; 114 ; 210) et les moyens optiques ;
5) des moyens de mémoire destinés à mémoriser le signal de sortie de ladite barrette ;
6) des moyens d'alimentation en énergie électrique destinés à l'amenée d'énergie nécessaire au fonctionnement dudit appareil ;
7) des moyens décodeurs destinés à décoder les informations optiques ; et
8) des moyens d'affichage (28 ; 214) destinés à afficher une image desdites informations optiques capturées
b) en affichant ladite image sur ledit affichage ; et
c) en dirigeant ledit dispositif de balayage vers des informations optiques placées de manière à être lues au moins partiellement à l'aide de ladite image sur ledit affichage.

14. Procédé selon la revendication 13, dans lequel ledit logement à une taille et une forme qui conviennent à un fonctionnement en mode portatif.

15. Procédé selon la revendication 13, dans lequel ladite barrette photosensible (14) est une barrette monodimensionnelle.

16. Procédé selon la revendication 15, dans lequel lesdits moyens optiques comprennent, en outre, des moyens (22 ; 24) destiné au balayage tramé de segments d'image monodimensionnels d'une image bidimensionnelle sur les zones photosensibles de ladite barrette (14).

17. Procédé selon la revendication 13, dans lequel ladite barrette photosensible (14) est une barrette bidimensionnelle.

18. Procédé selon la revendication 13, comprenant, en outre, des moyens de grossissement destinés à modifier la hauteur d'image d'un objet focalisé sur ladite barrette.

19. Procédé selon la revendication 14, comprenant, en outre, des moyens de focalisation destinés à focaliser de façon variable l'image d'un objet sur ladite barrette.

20. Procédé selon la revendication 13, dans lequel ladite mémoire est volatile.

21. Procédé selon la revendication 13, dans lequel lesdits moyens de reconnaissance de forme et de décodage des informations optiques (26) incluent des moyens à processeurs parallèles (26) commandés au moins en partie par un ensemble d'instructions à logique floue à la fois pour viser et reconnaître la forme d'informations optiques probables.

22. Procédé selon la revendication 13, dans lequel lesdits moyens de reconnaissance de forme (26) se composent d'un réseau neuronal.

23. Procédé selon la revendication 13, dans lequel lesdits moyens optiques (42 ; 200) comprennent, en outre, des moyens à focalisation automatique.

24. Procédé selon la revendication 13, comprenant, en outre, l'étape consistant à soustraire tout tremblement de la main de l'utilisateur de l'image affichée aux yeux de l'utilisateur.

25. Appareil selon la revendication 1, comprenant, en outre, des moyens destinés à limiter le tremblement de l'image affichée sur l'affichage (28).

26. Procédé selon la revendication 13, dans lequel l'appareil inclut :
9) des moyens de reconnaissance de forme (26 ; 212) destinés à aider un utilisateur à reconnaître et à confirmer la possibilité de décoder les informations optiques ; et dans lequel
10) lesdits moyens d'affichage (28 ; 214) sont associés audit logement afin d'afficher ladite image telle qu'elle est traitée par lesdits moyens de reconnaissance de forme (26 ; 212), lesdits moyens d'affichage (28 ; 214) incluant, en outre, des moyens d'indication de la possibilité de décoder les informations optiques.
